# EUROPÄISCHE PATENTANMELDUNG

(11) **EP 1 111 949 A2**
(43) Veröffentlichungstag der Anmeldung: **27.06.2001**
(21) Anmeldenummer: 00126288.0
(22) Anmeldetag: 01.12.2000
(51) Int. Cl.: H04Q 7/38

(54) **Positionsabhängige Anrufumleitung**

(30) Priorität: 21.12.1999 DE 19961792
(71) Anmelder: SIEMENS AKTIENGESELLSCHAFT, 80333 München (DE)
(72) Erfinder: Amereller, Walter, 81549 München (DE); Blitz, Andre, 81827 München (DE)

(57) **Zusammenfassung**

Durch das erfindungsgemäße Verfahren wird eine Anrufumleitung automatisch gesteuert, die von einem an eine Vermittlungseinrichtung (V) gekoppelten, ersten Endgerät (TEG) zu einem beliebigen zweiten Endgerät (MEG) führt. Die Steuerung der Anrufumleitung erfolgt in Abhängigkeit von der Position eines mobilen Endgerätes (MEG) relativ zu einer an die Vermittlungseinrichtung (V) gekoppelten Basisstation (BS1). Ein Maß für die relative Position des mobilen Endgerätes (MEG) wird dabei anhand von zwischen der Basisstation (BS1) und dem mobilen Endgerät (MEG) übertragenen Funksignalen ermittelt.

## Beschreibung

Die Erfindung betrifft ein Verfahren zum Steuern einer Anrufumleitung.

Bei vielen Vermittlungseinrichtungen zeitgemäßer Kommunikationssysteme können für die an die Vermittlungseinrichtungen angeschlossenen Endgeräte Anrufumleitungen eingerichtet werden. Das Einrichten und Aktivieren einer Anrufumleitung für ein Endgerät hat die Wirkung, daß für dieses Endgerät eintreffende Anrufe von der Vermittlungseinrichtung dieses Endgerätes zu einem anderen, vom Benutzer bestimmbaren Endgerät umgeleitet werden. Unter dem Begriff Anrufumleitung wird im folgenden auch eine sogenannte Rufweiterschaltung verstanden, bei der ein für ein Endgerät eintreffender Anruf zunächst an diesem Endgerät signalisiert wird und erst bei Nichtannahme zu einem Umleitungsziel umgeleitet wird.

Häufig wird eine Anrufumleitung dazu verwendet, Anrufe, die an ein am Arbeitsplatz eines Benutzers befindliches, schnurgebundenes Endgerät gerichtet sind, auf ein anderes Endgerät umzuleiten, wenn der Benutzer seinen Arbeitsplatz verläßt. Der Benutzer muß zu diesem Zweck bei jedem Verlassen des Arbeitsplatzes eine entsprechende Anrufumleitung in der Vermittlungseinrichtung aktivieren. Als Umleitungsziel kann der Benutzer dabei z.B. ein mitgeführtes mobiles oder schnurloses Endgerät, eine Sprachbox oder ein Endgerät eines Arbeitskollegen bestimmen. Bei aktivierter Anrufumleitung signalisiert die Vermittlungseinrichtung dann die für das schnurgebundene Endgerät am Arbeitsplatz eintreffenden Anrufe auf dem als Umleitungsziel bestimmten Endgerät. Bei der Rückkehr des Benutzers an seinen Arbeitsplatz muß der Benutzer die Anrufumleitung wieder explizit deaktivieren, so daß eintreffende Anrufe wieder zum schnurgebundenen Endgerät des Arbeitsplatzes vermittelt werden.

Die zum Aktivieren bzw. Deaktivieren einer Anrufumleitung bei jedem Verlassen bzw. bei jeder Rückkehr an den Arbeitsplatz vorzunehmenden Benutzereingaben sind zeitraubend und kompliziert. Außerdem besteht die Gefahr, daß der Benutzer z.B. beim Verlassen seines Arbeitsplatzes vergißt die Anrufumleitung zu aktivieren und in infolgedessen für eintreffende Anrufe zeitweilig nicht erreichbar ist.

Es ist Aufgabe der vorliegenden Erfindung ein Verfahren anzugeben, das ein automatisches und bedarfsgerechtes Steuern einer Anrufumleitung erlaubt.

Gelöst wird diese Aufgabe durch ein Verfahren mit den Merkmalen des Patentanspruches 1 bzw. des Patentanspruchs 15.

Das erfindungsgemäße Verfahren erlaubt ein automatisches Steuern einer Anrufumleitung für ein erstes Endgerät zu einem beliebigen zweiten Endgerät abhängig von einer Position oder einem Erreichbarkeitszustand eines mobilen Endgerätes. Das mobile Endgerät kann dabei gewissermaßen als Indikator dafür angesehen werden, wo sich ein das mobile Endgerät bei sich tragender Benutzer aufhält und/oder ob dieser Benutzer für Verbindungsanforderungen erreichbar ist. Unter einem mobilen Endgerät sei dabei auch ein sogenanntes schnurloses Endgerät verstanden.

Das Steuern der Anrufumleitung kann z.B. ein Einrichten, Konfigurieren, Aktivieren oder Deaktiveren der Anrufumleitung umfassen. So kann beispielsweise eine Anrufumleitung für ein Festnetzendgerät am Schreibtisch des Benutzers dann aktiviert werden, wenn der Benutzer mit seinem mobilen Endgerät einen vorgegebenen Bereich um seinen Schreibtisch verläßt. Die zu aktivierende Anrufumleitung kann zu einem beliebigen zweiten Endgerät führen, wie z.B. zum mobilen Endgerät selbst, zu einer Sprachbox, zu einem Endgerät eines Arbeitskollegen, zu einem Heimanschluß des Benutzers oder zu einem weiteren mobilen Endgerät des Benutzers. Beim letztgenannten Beispiel kann eine durch das erfindungsgemäße Verfahren gesteuerte Anrufumleitung dazu verwendet werden, ein sogenanntes Roaming zu einem anderen mobilen Endgerät zu realisieren, das auch einem anderen Funknetz als das als Indikator verwendete mobile Endgerät angehören kann.

Das erfindungsgemäße Verfahren ist im wesentlichen unabhängig von dem vom mobilen Endgerät und der Basisstation verwendeten drahtlosen Kommunikationsverfahren. Beispielsweise kann ein mobiles Endgerät gemäß dem Bluetooth-, DECT- und/oder GSM-Standard verwendet werden.

Vorteilhafte Ausführungsformen und Weiterbildungen der Erfindung sind in den abhängigen Ansprüchen angegeben.

Gemäß einer vorteilhaften Ausführungsform der Erfindung kann als Maß für die Position des mobilen Endgerätes ein Abstandsmaß für den Abstand des mobilen Endgerätes zu einer Basisstation ermittelt werden. Ein solches Abstandsmaß läßt sich besonders einfach aus der Empfangsfeldstärke oder der Signallaufzeit von zwischen Basisstation und mobilem Endgerät ausgetauschten Funksignalen, entweder durch die Basisstation oder durch das mobile Endgerät bestimmen.

Für eine genauere Positionsbestimmung des mobilen Endgeräts können die zwischen dem mobilen Endgerät und mehreren Basisstationen übertragenen Funksignale ausgewertet werden. Beispielsweise kann dazu der jeweilige Abstand des mobilen Endgerätes zu mehreren Basisstationen ermittelt werden, um daraus ein Maß für die Position des mobilen Endgerätes aufgrund geometrischer Beziehungen zu bestimmen. Darüber hinaus kann das mobile Endgerät zur Positionsbestimmung auch von mehreren Basisstationen angepeilt werden. Die relativ zu den Basisstationen ermittelte Position des mobilen Endgerätes kann weiterhin dazu benutzt werden, bei Kenntnis der Position des ersten Endgerätes ein Maß für den Abstand des mobilen Endgerätes zu diesem ersten Endgerät zu bestimmen.

Das Maß für die Position des mobilen Endgerätes kann sowohl durch diese selbst als auch durch eine Basisstation ermittelt werden. Eine Ermittlung durch die Basisstation hat den Vorteil, daß das erfindungsgemäße Verfahren mit handelsüblichen mobilen Endgeräten durchführbar ist, die dazu keiner Veränderung bedürfen.

Das Maß für die Position des mobilen Endgerätes kann nach seiner Ermittlung als solches zur Basisstation bzw. zur Vermittlungseinrichtung übertragen werden. Alternativ dazu kann das mobile Endgerät bzw. die Basisstation das ermittelte Positionsmaß auch dahingehend überprüfen, ob es einen vorgegebenen Werterahmen, z.B. einen vorgegebenen Maximalabstand zur Basisstation, überschreitet, und nur falls dies zutrifft, eine Meldung an die Basisstation bzw. die Vermittlungseinrichtung übermitteln. Eine Übermittlung einer Meldung hat als Vorteil, daß die Vermittlungseinrichtung die Position des mobilen Endgerätes nicht selbst auswerten muß. In diesem Fall kann als Meldung vorzugsweise eine für eine direkte Steuerung von Anrufumleitungen übliche oder standardisierte Steuermeldung verwendet werden. Damit ist zur Durchführung des erfindungsgemäßen Verfahrens kein Eingriff in bestehende Vermittlungseinrichtungen erforderlich.

Die Prüfung der Position des mobilen Endgerätes gestaltet sich besonders einfach, wenn der vorgegebene Werterahmen durch die Reichweite der drahtlosen Verbindung zwischen mobilem Endgerät und Basisstation bestimmt ist. In diesem Fall wird eine Meldung zur Basisstation bzw. zur Vermittlungseinrichtung dann übermittelt, wenn das mobile Endgerät den Funkbereich der Basisstation verläßt.

Für den Fall, daß das mobile Endgerät bei verschiedenen sich in Funkreichweite befindlichen Basisstationen zu einem Verbindungsaufbau berechtigt ist, kann weiterhin eine Priorisierungsliste, z.B. im mobilen Endgerät, vorgegeben sein, die angibt, bei welcher dieser Basisstationen sich das mobile Endgerät zum Zwecke der Steuerung der Anrufumleitung bevorzugt einbucht. Einer Basisstation kann dabei vorzugsweise eine um so höhere Priorität zugeordnet werden, je näher sie dem ersten Endgerät liegt. In der Priorisierungsliste angegebene Basisstationen können dabei auch unterschiedlichen Funknetzen angehören. Durch die Priorisierungsliste können auch verschiedenen Funknetzen unterschiedliche Prioritäten zugeordnet werden.

Ein Ausführungsbeispiel der Erfindung wird nachfolgend anhand der Zeichnung näher erläutert.

Dabei zeigen jeweils in schematischer Darstellung:
- Figur 1: ein Kommunikationssystem mit einer Vermittlungseinrichtung mit einer eingerichteten aber nicht aktivierten Anrufumleitung, und
- Figur 2: dasselbe Kommunikationssystem mit aktivierter Anrufumleitung.

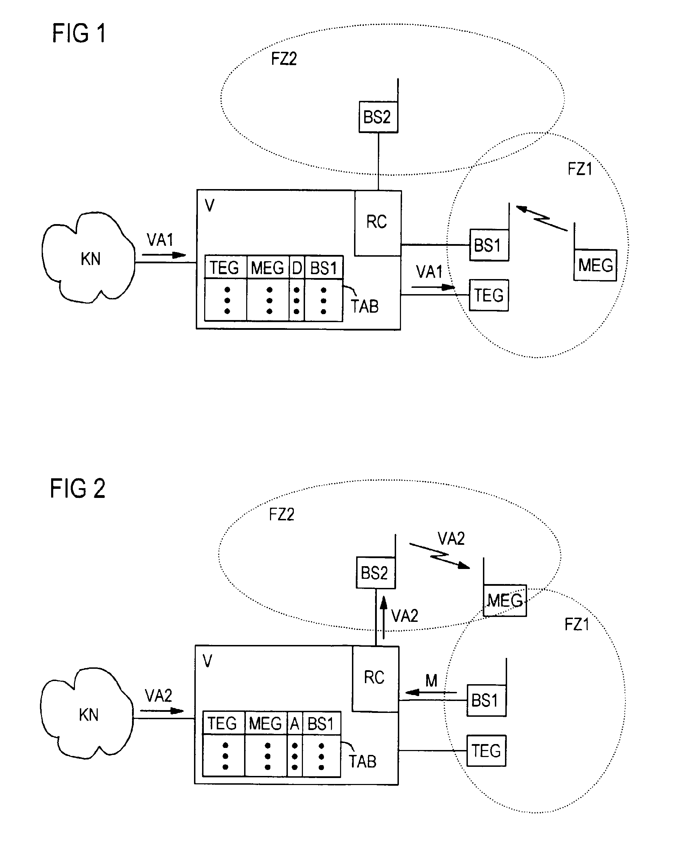

In Figur 1 und Figur 2 ist jeweils ein Kommunikationssystem mit einer an ein Kommunikationsnetz KN angeschlossenen Vermittlungseinrichtung V, z.B. eine sog. PBX-Anlage (PBX: private branch exchange), schematisch dargestellt. An die Vermittlungseinrichtung V sind ein schnurgebundenes Tischendgerät TEG sowie Basisstationen BS1 und BS2 angekoppelt. Die Funkzelle FZ1 der Basisstation BS1 und die Funkzelle FZ2 der Basisstation BS2 sind jeweils als punktierte Ellipsen angedeutet. Dem Kommunikationssystem gehört weiterhin ein mobiles Endgerät MEG an, das zur Verbindungsaufnahme sowohl über die Basisstation BS1 als auch über die Basisstation BS2 berechtigt ist.

Für das vorliegende Ausführungsbeispiel sei angenommen, daß die Basisstation BS1 sich in unmittelbarer Nähe des Tischendgerätes TEG befindet und für das mobile Endgerät MEG eine Heimatbasisstation oder eine in anderer Weise priorisierte Basisstation ist. Der Benutzer des Tischendgerätes TEG sei zugleich der Benutzer des mobilen Endgerätes MEG und trage dieses bei sich.

Die Basisstationen BS1 und BS2 können z.B. als DECT-Basisstationen (DECT: Digital Enhanced Cordless Telephony) realisiert sein, die demselben oder verschiedenen Funknetzen angehören. Das mobile Endgerät MEG ist in diesem Fall als schnurloses DECT-Endgerät ausgeführt, das in dem gemeinsamen bzw. den verschiedenen Funknetzen der Basisstationen BS1, BS2 jeweils als zur Verbindungsaufnahme berechtigt registriert ist. Alternativ dazu kann die Basisstation BS1 auch als sogenanntes Bluetooth-Modul ausgeführt sein, das über ein Bluetooth-Modul im mobilen Endgerät MEG dessen Ankopplung an die Vermittlungseinrichtung V über kurze Distanzen erlaubt.

Die Basisstationen BS1 und BS2 sind jeweils an eine Funkvermittlungsbaugruppe RC der Vermittlungseinrichtung V angekoppelt. Die Funkvermittlungsbaugruppe RC dient dem Zweck, einen Verbindungsaufbau und eine Verbindungsführung über daran angeschlossene Basisstationen zu mobilen Endgeräten selbständig zu steuern. Die Vermittlungseinrichtung V enthält weiterhin eine Anrufumleitungstabelle TAB, in die für die bei der Vermittlungseinrichtung V registrierten Endgeräte, hier TEG und MEG, Anrufumleitungen zu beliebigen Endgeräten, z.B. durch Benutzereingaben, eingetragen werden können. Im vorliegenden Ausführungsbeispiel ist für das Tischendgerät TEG eine Anrufumleitung zu dem mobilen Endgerät MEG eingetragen. Für das mobile Endgerät MEG selbst ist keine Anrufumleitung eingetragen.

Jedem Endgerät, hier TEG, für das eine Anrufumleitung eingerichtet ist, wird in der Anrufumleitungstabelle TAB ein jeweiliges Zielendgerät, hier MEG, ein Aktivierungsstatus, hier A für aktiviert oder D für deaktiviert, sowie eine Auslöseinformation, hier BS1, zugeordnet. Die Auslöseinformation bezeichnet dabei diejenigen Endgeräte, Basisstationen, Baugruppen und/oder Ereignisse, die ein Steuern der zugeordneten Anrufumleitung auslösen können. Im vorliegenden Ausführungsbeispiel bezeichnet die Auslöseinformation die Basisstation BS1. Dies bedeutet, daß die für das Tischendgerät TEG eingetragene Anrufumleitung durch Meldungen der Basisstation BS1 gesteuert werden kann.

Figur 1 zeigt eine Situation, in welcher der Benutzer sich mit seinem mobilen Endgerät MEG in unmittelbarer Nähe des Tischendgerätes TEG und der Basisstation BS1 aufhält. Das mobile Endgerät MEG befindet sich innerhalb der Funkzelle FZ1 in Funkreichweite der Basisstation BS1. Die Erreichbarkeit des mobilen Endgeräts MEG wird von der Basisstation BS1 durch einen mittels eines stilisierten Blitzes angedeuteten Austauschs von Funksignalen festgestellt und an die Funkvermittlungsbaugruppe RC gemeldet.

In der Vermittlungseinrichtung ist durch einen entsprechenden Eintrag in der Anrufumleitungstabelle TAB eine Anrufumleitung für das Tischendgerät TEG zum mobilen Endgerät MEG eingerichtet, aber zunächst durch einen, dem Tischendgerät TEG zugeordneten Aktivierungsstatus D als deaktiviert gekennzeichnet.

Da die für das Tischendgerät TEG eingerichtete Anrufumleitung noch deaktiviert ist, werden aus dem Kommunikationsnetz KN bei der Vermittlungseinrichtung V eintreffende, an das Tischendgerät TEG gerichtete Verbindungsanforderungen VA1 zum Tischendgerät TEG vermittelt. Da sich der Benutzer mit seinem mobilen Endgerät MEG, wie durch die Basisstation BS1 festgestellt, in der Nähe des Tischendgerätes TEG befindet, können die eintreffenden Verbindungsanforderungen VA1 durch den Benutzer am Tischendgerät TEG entgegengenommen werden.

Figur 2 veranschaulicht eine Situation, in der der Benutzer mit seinem mobilen Endgerät MEG die Funkzelle FZ1 der Basisstation BS1 und damit einen vorgegebenen Bereich um sein Tischendgerät TEG verläßt. Sobald durch die Basisstation BS1 festgestellt wird, daß das mobile Endgerät MEG die Funkzelle FZ1 verläßt, sendet diese eine Meldung M zur Vermittlungsstation V. Das Verlassen der Funkzelle FZ1 wird durch die Basisstation BS1 festgestellt, indem die Empfangsfeldstärke von Funksignalen des mobilen Endgerätes MEG mit einem vorgegebenen Grenzwert verglichen wird, der die Reichweite der Funkverbindung bestimmt.

Die Meldung M wird von der Vermittlungsstation V als von der Basisstation BS1 kommend erkannt, woraufhin in der Anrufumleitungstabelle TAB ein Eintrag mit einer diese Basisstation BS1 bezeichnenden Auslöseinformation ermittelt wird. Im vorliegenden Ausführungsbeispiel betrifft der ermittelte Eintrag die bisher deaktivierte Anrufumleitung für das Tischendgerät TEG zum mobilen Endgerät MEG. Diese Anrufumleitung wird daraufhin durch die Vermittlungseinrichtung V aktiviert und durch Eintragen eines Aktivierungsstatus A in die Anrufumleitungstabelle TAB als aktiv gekennzeichnet. Nachfolgende, aus dem Kommunikationsnetz KN an das Tischendgerät TEG gerichtete Verbindungsanforderungen VA2 werden infolgedessen von der Vermittlungseinrichtung V zum mobilen Endgerät MEG umgeleitet. Die Vermittlungseinrichtung V gibt die Verbindungsanforderungen VA2 dazu an die Funkvermittlungsbaugruppe RC weiter, die den weiteren, drahtlosen Verbindungssaufbau zum mobilen Endgerät MEG steuert. Im vorliegenden Ausführungsbeispiel sei angenommen, daß sich das mobile Endgerät MEG nach Verlassen der Funkzelle FZ1 in der Funkzelle FZ2 der Basisstation BS2 befindet und sich durch Austausch von Funksignalen mit der Basisstation BS2 über diese bei der Funkvermittlungsbaugruppe RC registriert hat. Durch diese Registrierung wird die Funkvermittlungsbaugruppe RC veranlaßt, alle für das mobile Endgerät MEG eintreffenden Verbindungsanforderungen VA2 über die Basisstation BS2 zum mobilen Endgerät MEG zu vermitteln.

Der Benutzer ist damit auch bei Abwesenheit von seinem Tischendgerät TEG für an sein Tischendgerät TEG gerichtete Anrufe erreichbar.

Anstelle einer Anrufumleitung auf das mobile Endgerät MEG können mit dem erfindungsgemäßen Verfahren auch Anrufumleitungen auf beliebige andere Endgeräte gesteuert werden, die auch einem anderen Kommunikationssystem als die Vermittlungseinrichtung V angehören können. So kann beispielsweise durch einen entsprechenden Eintrag in die Anrufumleitungstabelle TAB für das Tischendgerät TEG eine Anrufumleitung zu einer Sprachbox, zum Tischendgerät eines Arbeitskollegen, zum Heimendgerät des Benutzers oder zu einem weiteren mobilen Endgerät des Benutzers, jeweils durch dessen Verlassen der Funkzelle FZ1, aktiviert werden. Eine Anrufumleitung auf ein vom mobilen Endgerät MEG verschiedenes mobiles Endgerät des Benutzers, ist z.B. dann vorteilhaft, wenn das mobile Endgerät MEG ein schnurloses DECT-Endgerät ist, das nur eine relativ geringe Funkreichweite (in der Größenordnung von 100 Metern) hat. In diesem Fall kann eine Anrufumleitung auf ein flächendeckend erreichbares GSM-Endgerät (Global System for Mobile Communication) aktiviert werden, sobald das schnurlose DECT-Endgerät MEG die Funkzelle FZ1 verläßt. Dieses Verfahren ist besonders vorteilhaft, wenn das die Aktivierung der Anrufumleitung auslösende DECT-Endgerät MEG und das GSM-Endgerät in demselben mobilen Endgerät integriert sind.

Außer der Meldung M, die von der Basisstation BS1 gesendet wird, wenn das mobile Endgerät MEG die Funkzelle FZ1 verlässt, kann die Basisstation BS1 noch eine oder mehrere weitere Meldungen, abhängig von der anhand der Empfangsfeldstärke festgestellten Position des mobilen Endgerätes MEG und/oder von dessen Betriebszustand zur Vermittlungseinrichtung V übermitteln. So kann bei einem Ansteigen der Empfangsfeldstärke, das heißt, bei Annäherung des mobilen Endgerätes MEG an die Basisstation BS1, eine spezifische Meldung, die ein Deaktivieren einer vorher aktivierten Anrufumleitung veranlaßt, an die Vermittlungseinrichtung V übermittelt werden.

Allgemein können für unterschiedliche, von der Basisstation BS1 feststellbare Positionsveränderungen des mobilen Endgerätes MEG, jeweils spezifische, an die Vermittlungseinrichtung V zu übermittelnde Meldungen vorgesehen sein, durch die eine oder mehrere Anrufumleitungen in vorgegebener Weise gesteuert werden. Zum Feststellen einer Positionsveränderung des mobilen Endgerätes MEG kann die Basisstation BS1 zum Beispiel periodisch die Empfangsfeldstärke überprüfen.

Weiterhin kann eine Meldung für den Fall vorgesehen sein, daß die Basisstation BS1 eine Veränderung eines Betriebszustandes des mobilen Endgerätes, wie zum Beispiel des Einschaltzustandes oder eines Belegzustandes, feststellt. So kann beispielsweise bei einer Anrufannahme des Benutzers am mobilen Endgerät MEG eine spezifische Meldung zur Vermittlungseinrichtung V übermittelt werden, wodurch für das Tischendgerät TEG eine Anrufumleitung zu einer Sprachbox des Benutzers aktiviert wird.

## Patentansprüche

1. Verfahren zum Steuern einer Anrufumleitung für ein an eine Vermittlungseinrichtung (V) gekoppeltes, erstes Endgerät (TEG) zu einem zweiten Endgerät (MEG), bei dem anhand von Funksignalen, die zwischen einem mobilen Endgerät (MEG) und mindestens einer an die Vermittlungseinrichtung (V) gekoppelten Basisstation (BS1) übermittelt werden, ein Maß für die Position des mobilen Endgerätes (MEG) relativ zu der mindestens einen Basisstation (BS1) ermittelt wird, und
die Anrufumleitung durch die Vermittlungseinrichtung (V) abhängig von dem ermittelten Maß gesteuert wird.

2. Verfahren nach Anspruch 1,
**dadurch gekennzeichnet,**
daß als Maß für die Position des mobilen Endgerätes (MEG) ein Abstandsmaß für den Abstand des mobilen Endgerätes (MEG) zu der mindestens einen Basisstation (BS1) ermittelt wird.

3. Verfahren nach einem der vorhergehenden Ansprüche,
**dadurch gekennzeichnet,**
daß das Maß für die Position des mobilen Endgerätes (MEG) anhand der Empfangsfeldstärke eines zwischen dem mobilen Endgerät (MEG) und der mindestens einen Basisstation (BS1) übertragenen Funksignals ermittelt wird.

4. Verfahren nach einem der vorhergehenden Ansprüche,
**dadurch gekennzeichnet,**
daß zwischen dem mobilen Endgerät (MEG) und mehreren Basisstationen übermittelte Funksignale ausgewertet werden, um das Maß für die Position des mobilen Endgerätes (MEG) zu ermitteln.

5. Verfahren nach Anspruch 4,
**dadurch gekennzeichnet,**
daß als Maß für die Position des mobilen Endgerätes (MEG) ein Abstandsmaß für den Abstand des mobilen Endgerätes (MEG) zum ersten Endgerät (TEG) ermittelt wird.

6. Verfahren nach einem der vorhergehenden Ansprüche,
**dadurch gekennzeichnet,**
daß das Maß für die Position des mobilen Endgerätes (MEG) durch die mindestens eine Basisstation (BS1) ermittelt wird.

7. Verfahren nach einem der Ansprüche 1 bis 5,
**dadurch gekennzeichnet,**
daß das Maß für die Position des mobilen Endgerätes (MEG) durch das mobile Endgerät (MEG) ermittelt und zu einer Basisstation (BS1) übertragen wird.

8. Verfahren nach einem der Ansprüche 1 bis 5,
**dadurch gekennzeichnet,**
daß durch das mobile Endgerät (MEG) das Maß für seine Position ermittelt und bei Überschreiten eines vorgegebenen Werterahmens durch das ermittelte Maß eine Meldung (M) zu einer Basisstation (BS1) übertragen wird, die daraufhin das Steuern der Anrufumleitung veranlaßt.

9. Verfahren nach Anspruch 6 oder 7,
**dadurch gekennzeichnet,**
daß die mindestens eine Basisstation (BS1) bei Überschreiten eines vorgegebenen Werterahmens durch das ermittelte Maß für die Position des mobilen Endgerätes (MEG) eine Meldung (M) zur Vermittlungseinrichtung (V) übermittelt, die daraufhin die Anrufumleitung in vorgegebener Weise steuert.

10. Verfahren nach Anspruch 6 oder 7,
**dadurch gekennzeichnet,**
daß das ermittelte Maß für die Position des mobilen Endgerätes (MEG) von einer Basisstation (BS1) zur Vermittlungseinrichtung (V) übermittelt wird, und
durch die Vermittlungseinrichtung (V) die Anrufumleitung in vorgegebener Weise gesteuert wird, falls das übermittelte Maß einen vorgegebenen Werterahmen überschreitet.

11. Verfahren nach Anspruch 8 oder 9,
**dadurch gekennzeichnet,**
daß die übermittelte Meldung (M) eine das erste (TEG) und das zweite Endgerät (MEG) identifizierende Steuerinformation zum Steuern einer die identifizierten Endgeräte (TEG, MEG) betreffenden Anrufumleitung umfaßt.

12. Verfahren nach einem der Ansprüche 8 bis 11,
**dadurch gekennzeichnet,**
daß der vorgegebene Werterahmen durch die Reichweite der drahtlosen Verbindung zwischen dem mobilem Endgerät (MEG) und der mindestens einen Basisstation (BS1) bestimmt ist.

13. Verfahren nach einem der Ansprüche 8 bis 12,
**dadurch gekennzeichnet,**
daß unterschiedliche Werterahmen vorgegeben sind, bei deren jeweiligem Überschreiten eine werterahmenspezifische Anrufumleitung veranlaßt wird.

14. Verfahren nach einem der Ansprüche 8 bis 13,
**dadurch gekennzeichnet,**
daß für verschiedene mobile Endgeräte jeweils ein endgerätespezifischer Werterahmen vorgegeben ist.

15. Verfahren zum Steuern einer Anrufumleitung für ein an eine Vermittlungseinrichtung (V) gekoppeltes, erstes Endgerät (TEG) zu einem zweiten Endgerät (MEG), bei dem durch eine an die Vermittlungseinrichtung (V) gekoppelte Basisstation (BS1) registriert wird, ob ein vom ersten Endgerät (TEG) verschiedenes, mobiles Endgerät (MEG) für Verbindungsanforderungen (VA1, VA2) erreichbar ist, und abhängig davon die Anrufumleitung durch die Vermittlungseinrichtung (V) gesteuert wird.

16. Verfahren nach einem der vorhergehenden Ansprüche,
**dadurch gekennzeichnet,**
daß durch das mobile Endgerät (MEG), falls sich in dessen Funkreichweite mehrere Basisstationen (BS1, BS2) befinden, anhand einer vorgegebenen Priorisierungsliste bestimmt wird, bei welcher dieser Basisstationen (BS1, BS2) sich das mobile Endgerät (MEG) zum Zwecke der Steuerung der Anrufumleitung bevorzugt einbucht.

17. Verfahren nach einem der vorhergehenden Ansprüche,
**dadurch gekennzeichnet,**
daß für verschiedene mobile Endgeräte jeweils eine endgerätespezifische Anrufumleitung gesteuert wird.
